(19) Europäisches Patentamt
European Patent Office
Office européen des brevets

(11) **EP 3 451 726 B1**

(12) **FASCICULE DE BREVET EUROPEEN**

(45) Date de publication et mention de la délivrance du brevet:
**01.07.2020 Bulletin 2020/27**

(51) Int Cl.:
***H04W 16/08*** *(2009.01)*     ***H04W 28/08*** *(2009.01)*

(21) Numéro de dépôt: **18191068.8**

(22) Date de dépôt: **28.08.2018**

(54) **MÉTHODE DE RÉPARTITION DE CHARGE DANS UN RÉSEAU HÉTÉROGÈNE À MULTITECHNOLOGIE D'ACCÈS RADIO**

LASTVERTEILUNGSMETHODE IN EINEM HETEROGENEN NETZ MIT MULTITECHNOLOGIE FÜR DEN FUNKZUGANG

METHOD FOR LOAD DISTRIBUTION IN A HETEROGENEOUS NETWORK WITH MULTI-TECHNOLOGY RADIO ACCESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.09.2017 FR 1758112**

(43) Date de publication de la demande:
**06.03.2019 Bulletin 2019/10**

(73) Titulaire: **Commissariat à l'énergie atomique et aux énergies alternatives 75015 Paris (FR)**

(72) Inventeurs:
• **DE DOMENICO, Antonio 38000 Grenoble (FR)**
• **GHATAK, Gourab 38000 Grenoble (FR)**

(74) Mandataire: **Brevalex 56, Boulevard de l'Embouchure B.P. 27519 31075 Toulouse Cedex 2 (FR)**

(56) Documents cités:
**US-A1- 2016 073 287**

• **SARABJOT SINGH ET AL: "Offloading in Heterogeneous Networks: Modeling, Analysis, and Design Insights", IEEE TRANSACTIONS ON WIRELESS COMMUNICATIONS, IEEE SERVICE CENTER, PISCATAWAY, NJ, US, vol. 12, no. 5, 1 mai 2013 (2013-05-01), pages 2484-2497, XP011511608, ISSN: 1536-1276, DOI: 10.1109/TWC.2013.040413.121174**
• **SINGH SARABJOT ET AL: "Downlink rate distribution in multi-RAT heterogeneous networks", 2013 IEEE INTERNATIONAL CONFERENCE ON COMMUNICATIONS (ICC), IEEE, 9 juin 2013 (2013-06-09), pages 5188-5193, XP032522293, ISSN: 1550-3607, DOI: 10.1109/ICC.2013.6655408 [extrait le 2013-11-04]**

**Description**

**DOMAINE TECHNIQUE**

La présente invention concerne de manière générale le domaine des réseaux cellulaires hétérogènes à multi-technologie d'accès radio, et plus particulièrement une méthode de répartition de la charge de trafic dans ces réseaux.

**ÉTAT DE LA TECHNIQUE ANTÉRIEURE**

Les réseaux de télécommunications cellulaires hétérogènes ou HetNets représentent une des solutions les plus prometteuses pour le développement de la prochaine génération de téléphonie mobile (5G). De manière générale, un réseau cellulaire hétérogène est composé de plusieurs niveaux (*tiers*) de cellules : macrocellules (*macrocells*) et petites cellules (*small cells*) telles que femtocellules (*femtocells*) et picocellules (*picocells*). Un réseau cellulaire multi-technologie ou multi-RAT (*multi Radio Access Technology*) est composé de réseaux utilisant différentes technologies d'accès radio, par exemple Wi-Fi et 3G, ces réseaux pouvant utiliser différentes bandes de fréquences.

Nous considérerons dans la suite des réseaux cellulaires hétérogènes à multitechnologie d'accès radio (multi-RAT HetNets). Un exemple représentatif d'un tel réseau est constitué de deux couches de cellules : une première couche de cellules comprend des macro-cellules opérant dans la gamme hyperfréquence au-dessous de 6 GHz (bande dénommée ci-après sub-6 GHz). Les macro-cellules sont servies par des stations de base, désignées par MBSs (Macro Base Stations). A cette première couche de cellules s'ajoute une seconde couche composée de petites cellules opérant à la fois dans la gamme sub-6 Ghz et dans la gamme millimétrique (25GHz-300GHz). Les petites cellules sont servies par des stations de base désignées par multi-RAT SBSs (multi Radio Access Technology Small Base Stations).

Alors que les stations de base MBSs du réseau conventionnel assurent une couverture continue aux utilisateurs, les stations de base multi-RAT SBSs permettent de fournir des débits élevés en exploitant conjointement les bandes sub-6 GHz et millimétrique.

Dans les réseaux HetNets conventionnels (c'est-à-dire monotechnologie), on recourt à des mécanismes de transfert de charge (*offloading*) des stations de base MBSs des macrocellules vers les stations de base SBSs des petites cellules. Un tel mécanisme de transfert, connu sous l'acronyme de CRE (Cell Range Expansion), consiste à ajouter un biais positif à la puissance du signal reçu de la station de base SBS avant de la comparer à la puissance du signal reçu par la station de base MBS. Ainsi, à puissance de réception égale, le terminal mobile s'associe à une station de base SBS plutôt qu'à une station de base MBS. On a pu montrer que, dans les réseaux HetNets conventionnels, le mécanisme précité conduit en moyenne à une dégradation du rapport du rapport signal sur bruit plus interférence ou SNIR (Signal to Noise and Interference Ratio) au niveau du terminal.

Dans les réseaux HetNets multi-RAT, la stratégie de répartition de la charge de trafic entre MBSs et SBSs est plus complexe. Ainsi par exemple, lorsque les stations SBSs fonctionnent dans une bande dans la gamme sub-6 GHz et dans la bande millimétrique, il est nécessaire de tenir compte de la forte atténuation sur le trajet de propagation (*path loss*) et de la sensibilité aux situations d'obstruction (*blockage*) dans la bande millimétrique. Dans certains cas on a pu montrer que le mécanisme de transfert permettait d'améliorer le SINR, car la forte atténuation de trajet et la directivité des antennes des stations SBSs réduisent le niveau d'interférence reçue par le terminal.

Un autre exemple se trouve dans le document technique SARABJOT SINGH ET AL: "Offloading in Heterogeneous Networks: Modeling, Analysis, and Design Insights", IEEE TRANSACTIONS ON WIRELESS COMMUNICATIONS, IEEE SERVICE CENTER, PISCATAWAY, NJ, US, vol. 12, no. 5, 1 mai 2013 (2013-05-01), pages 2484-2497.

Le but de la présente invention est de proposer une méthode de répartition de charge dans un réseau cellulaire hétérogène à multitechnologie d'accès radio, en particulier un réseau dans lequel les stations de base (SBSs) des petites cellules opèrent à la fois dans une bande de la gamme sub-6 GHz et dans la bande millimétrique, ladite méthode permettant de sélectionner le niveau d'association (MBS ou SBS) et la technologie d'accès radio (bande sub-6GHz de 0,7 à 6 GHz ou bande millimétrique de 25 à 300 GHz) de manière à maximiser le niveau de SINR au niveau des terminaux.

**EXPOSÉ DE L'INVENTION**

La présente invention est définie par une méthode de répartition de charge de trafic au sein d'un réseau hétérogène à multitechnologie d'accès radio telle que définie dans la revendication 1. Des modes avantageux de réalisation de cette méthode sont précisés dans les revendications dépendantes.

**BRÈVE DESCRIPTION DES DESSINS**

D'autres caractéristiques et avantages de l'invention apparaîtront à la lecture d'un mode de réalisation préférentiel de l'invention, fait en référence aux figures jointes parmi lesquelles :

La Fig. 1 représente de manière schématique l'ordinogramme d'une méthode de répartition de charge dans un réseau cellulaire hétérogène à multitechnologie d'accès radio, selon un mode de réalisation de l'invention ;

La Fig. 2 représente de manière schématique l'ordinogramme d'une méthode de calcul d'un couple optimal de valeurs de biais dans une étape de la Fig. 1 ;

La Fig. 3 représente de manière schématique l'ordinogramme d'une première variante de recherche d'un couple optimal de valeurs de biais dans une étape de la Fig. 2 ;

La Fig. 4 représente de manière schématique l'ordinogramme d'une seconde variante de recherche d'un couple optimal de valeurs de biais dans une étape de la Fig. 2.

## EXPOSÉ DÉTAILLÉ DE MODES DE RÉALISATION PARTICULIERS

On considérera dans la suite un réseau cellulaire hétérogène à multitechnologie d'accès radio. Sans perte de généralité, on supposera que le réseau comprend deux types de cellules : des macrocellules (servies par des stations de base MBSs) opérant dans la bande sub-6GHz (c'est-à-dire de 0,7 à 6 GHz) et des minicellules, dites encore petites cellules, (servies par des stations de base SBSs) opérant à la fois dans cette bande sub-6 GHz (ou dans une bande non disjointe de celle-ci) et dans la bande millimétrique (25 à 300 GHz).

Le principe à la base de l'invention est d'utiliser une première valeur de biais (bias), $Q_T$, pour sélectionner le niveau (tier) de cellule (macrocellule ou minicellule) qui servira le terminal et une seconde valeur de biais, $Q_R$, pour sélectionner la technologie d'accès radio dans le cas où le terminal est situé dans la zone de couverture d'une minicellule.

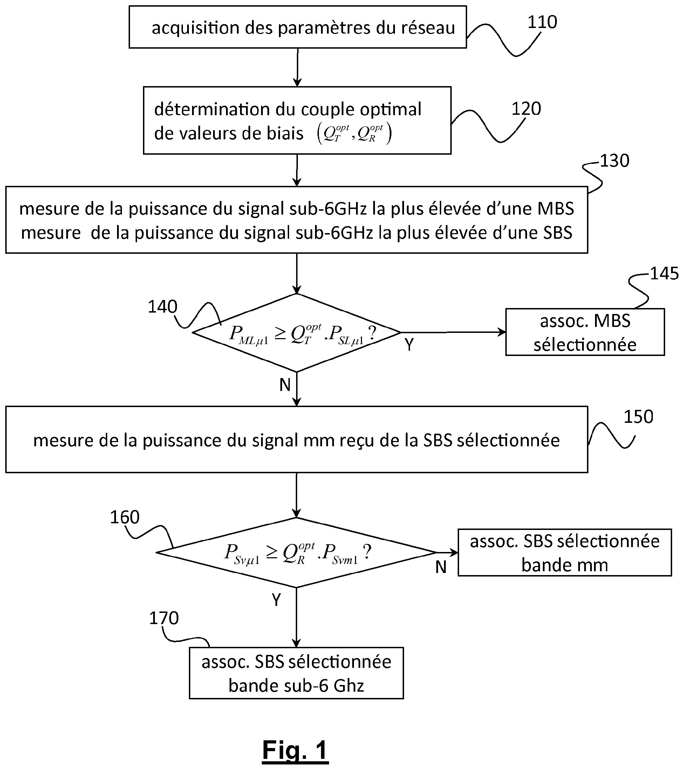

Plus précisément, la Fig. 1 représente de manière schématique l'ordinogramme d'une méthode de répartition de charge dans un réseau cellulaire hétérogène multitechnologie, selon un mode de réalisation de l'invention.

Dans une première étape, 110, on acquiert ou l'on mesure les paramètres de couverture du réseau. Ces paramètres sont par exemple les paramètres de la distribution statistique des stations de base MBSs et SBSs dans la zone couverte par le réseau, les puissances d'émission des stations de base MBSs et SBSs, les exposants et les coefficients des lois d'atténuation pour les trajets de propagation LOS et NLOS, les largeurs de bande respectivement utilisées pour la transmission en bande sub-6 GHz et pour la transmission en bande millimétrique, les densités de bruit respectives dans ces deux bandes, les distances moyennes de propagation LOS dans ces deux bandes. On rappelle qu'une propagation LOS (Line Of Sight) correspond au cas où la station de base est en ligne de visée directe et une propagation NLOS (Non Line Of Sight) au cas contraire.

Dans une seconde étape, 120, on détermine un couple optimal de valeurs de biais $Q_T$ et $Q_R$ en fonction des paramètres de couverture du réseau, comme exposé plus loin. Cette étape peut être réalisée une fois pour toutes ou bien à chaque modification des paramètres du réseau cellulaire. Les valeurs de biais optimales, notées $Q_T^{opt}$ et $Q_R^{opt}$ s'appliquent à l'ensemble du réseau.

On passe ensuite à la phase d'association proprement dite, exécutée à chaque fois qu'un terminal souhaite accéder au réseau.

A l'étape 130, le terminal mesure la puissance du signal de contrôle des stations de base MBSs. Dans la suite, on notera respectivement $P_{M\mu1}$ la puissance de signal la plus élevée reçue d'une station de base MBS. De manière similaire, on mesure respectivement $P_{S\mu1}$ la puissance de signal la plus élevée reçue d'une station de base SBS.

On recherche si une station de base (MBS) d'une macrocellule (choix du premier niveau) peut être associée au terminal.

Pour ce faire, on teste tout d'abord en 140 si :

$$P_{M\mu1} \ge Q_T^{opt} P_{S\mu1} \tag{1}$$

Si la condition (1) est vérifiée, on associe en 145 le terminal avec la station MBS correspondant au plus fort signal reçu. En d'autres termes, on associe au terminal une station MBS, s'il existe au moins une station MBS et si la plus forte puissance reçue d'une telle station dans la bande sub-6GHz est supérieure, d'un facteur $Q_T^{opt}$, à la plus forte puissance reçue d'une station SBS dans cette même bande. On note MBS$_{max}$ (resp. SBS$_{max}$) la station de base MBS (resp. SBS) correspondant à la plus forte puissance reçue par le terminal dans la bande sub-6GHz en question. Ainsi $P_{M\mu1}$ est la puissance reçue de MBS$_{max}$ dans la bande sub-6GHz et $P_{S\mu1}$ est la puissance reçue de SBS$_{max}$ dans cette bande.

Si la condition (1) n'est pas remplie, on mesure en 150 la puissance de signal de la station de base SBS$_{max}$ dans la bande millimétrique, soit $P_{Sm1}$, puis on teste en 160 si :

$$P_{S\mu 1} \geq Q_R^{opt} P_{Sm1} \qquad (2)$$

Si la condition (2) est remplie, on associe le terminal avec la station SBS$_{max}$ dans la bande sub-6GHz. A défaut, si la condition (2) n'est pas vérifiée, on associe au terminal la même station SBS$_{max}$ mais dans la bande millimétrique, en 170.

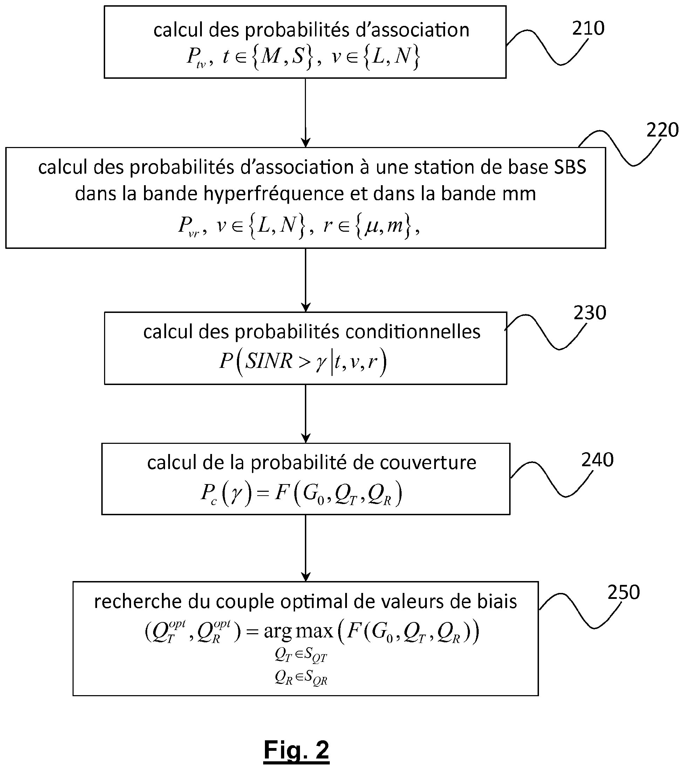

La Fig. 2 représente de manière schématique l'ordinogramme d'une méthode de calcul du couple optimal de valeurs de biais à l'étape 120 de la Fig. 1.

Cette méthode de calcul fait appel aux paramètres du réseau comme détaillé ci-après. Elle vise à maximiser la probabilité de couverture, définie comme la probabilité que le rapport signal sur bruit plus interférence au niveau d'un terminal soit, en moyenne, supérieur à une valeur prédéterminée $\gamma$. La moyenne est prise sur l'ensemble des positions relatives possibles du terminal par rapport aux stations de base déployées dans la zone.

Plus précisément si l'on note $P_{tvr}$ la probabilité d'association d'un terminal UE (*User Equipement*) avec une station de base de niveau $t$ ($t = M$ pour le niveau macrocellulaire et $t = S$ pour le niveau minicellulaire), dans des conditions de visibilité $v$ ($v = L$ dans des conditions de LOS et $v = N$ dans des conditions de NLOS) et avec la technologie d'accès radio $r$ ($r = \mu$ pour la bande sub-6GHz et $r = m$ pour la bande millimétrique), la probabilité de couverture $P_c(\gamma)$ relative à un niveau de *SINR* supérieur à $\gamma$, peut s'exprimer sous la forme :

$$P_c(\gamma) = P(SINR > \gamma) = \sum_{\substack{t \in \{M,S\} \\ v \in \{L,N\} \\ r \in \{\mu,m\}, t=S}} P(SINR > \gamma | t, v, r) P_{tvr} \qquad (3)$$

où $P(SINR > \gamma | t,v,r)$ est la probabilité que le niveau de *SINR* au niveau du terminal dans une configuration d'association $t,v,r$ soit supérieur à $\gamma$. On notera que l'ensemble des triplets sur lequel est effectuée la sommation (3) ne contient pas tous les triplets $(t,v,r)$ puisque le choix de la technologie d'accès radio n'est possible que dans le cas d'une association avec une SBS.

Dans une première étape, 210, on calcule les probabilités d'association d'un terminal avec une station de base MBS et une station de base SBS dans les états de visibilité LOS et NLOS, soit $P_{tv}$, $t \in \{M,S\}$, $v \in \{L,N\}$.

Cette probabilité d'association dépend, d'une part, de la distance du terminal à une station de base et, d'autre part, de l'état de visibilité de la station de base en question.

Si l'on connait les positions des différentes stations de base, on peut supposer que la position du terminal obéit à une loi uniforme de distribution spatiale.

En revanche, si l'on ne connait pas les positions des différentes stations de base, on pourra supposer que les positions des stations de base MBS et SBS suivent un processus stochastique de Poisson ponctuel dans la zone concernée. On notera respectivement $\lambda_M$ et $\lambda_S$ les densités de distribution bidimensionnelle du processus de Poisson ponctuel pour les stations MBS et SBS.

Quant aux états de visibilité LOS et NLOS, on supposera qu'ils suivent un modèle dit de sphère de LOS (*LOS bail model*), tel que décrit par exemple dans l'article de T. Bai et al. intitulé « Coverage and rate analysis for millimeter-wave cellular networks », IEEE Trans. Wireless Comm. vol. 13, n°2, pp. 1100-1114, 2015. Selon ce modèle, si le terminal se trouve à une distance inférieure à une distance caractéristique $d_M$ (resp. $d_S$) d'une station de base MBS (resp. SBS), la station de base sera supposée être en ligne de visée directe (LOS) du terminal. A défaut, l'état de visibilité sera considéré comme étant NLOS.

Les probabilités d'association avec une station de base MBS ou SBS, dans un état de visibilité LOS ou NLOS, notées $P_{tv}$ avec $t \in \{M,S\}$ et $v \in \{L,N\}$, sont respectivement données par :

$$P_{ML} = W_1 \exp\left(-\pi\lambda_M d_M^2\right)\exp\left(-\pi\lambda_S d_S^2\right) + \exp\left(-\pi\lambda_M d_M^2\right)\left(1 - \exp\left(-\pi\lambda_S d_S^2\right)\right)$$

$$(4\text{-}1)$$

$$P_{MN} = W_2\left(1 - \exp\left(-\pi\lambda_M d_M^2\right)\right)\left(1 - \exp\left(-\pi\lambda_S d_S^2\right)\right) \qquad (4\text{-}2)$$

$$P_{SL} = \left(1 - W_1\right)\exp\left(-\pi\lambda_M d_M^2\right)\exp\left(-\pi\lambda_S d_S^2\right) + \exp\left(-\pi\lambda_S d_S^2\right)\left(1 - \exp\left(-\pi\lambda_M d_M^2\right)\right)$$

$$(4\text{-}3)$$

$$P_{SN} = \left(1 - W_2\right)\left(1 - \exp\left(-\pi\lambda_M d_M^2\right)\right)\left(1 - \exp\left(-\pi\lambda_S d_S^2\right)\right) \qquad (4\text{-}4)$$

où $W_1$ est la probabilité que le terminal s'associe avec une station MBS dans le cas où une station de base MBS et une station de base SBS sont en état de visibilité LOS par rapport au terminal, et où $W_2$ est la probabilité que le terminal s'associe avec une station MBS dans le cas où une station de base MBS et une station de base SBS sont en état de visibilité NLOS par rapport au terminal. Les expressions analytiques de $W_1$ et $W_2$ sont données en annexe. Elles dépendent notamment des puissances d'émission respectives, $P_M$ et $P_S$ des stations de base MBS et SBS, du biais $Q_T$ introduit pour la sélection de niveau, ainsi que des caractéristiques des trajets de propagation entre la station de base MBS et le terminal, d'une part, et de la station de base SBS et le terminal, d'autre part.

Dans une seconde étape 220, on calcule la probabilité que, lorsqu'un terminal est associé à une station de base SBS, en état de visibilité LOS ou NLOS, il le soit dans la bande sub-6GHz ou dans la bande millimétrique.

Plus précisément, la probabilité $P_{v\mu}$ que le terminal soit associé à la station de base SBS en état de visibilité v via la bande sub-6 GHz est donnée par :

$$P_{v\mu} = \exp\left(-\pi\lambda_S \left(\frac{K_{Svm} G_0 Q_R}{K_{Sv\mu}}\right)^{\frac{2}{\alpha_{Svm} - \alpha_{Sv\mu}}}\right) \qquad (5\text{-}1)$$

et, par conséquent, la probabilité $P_{vm}$ que le terminal soit associé à la station de base SBS en état de visibilité V via la bande millimétrique est donnée par :

$$P_{vm} = 1 - P_{v\mu} \qquad (5\text{-}2)$$

où $G_0$ est le gain d'antenne dans la bande millimétrique, c'est-à-dire le produit du gain de l'antenne d'émission de la station de base SBS et du gain de l'antenne de réception du terminal UE dans cette bande (le gain d'antenne est supposé égal à 1 dans la bande sub-6GHz, les antennes d'émission et réception dans cette bande pouvant être considérées comme quasi omnidirectionnelles), $K_{Svm}$ et $K_{Sv\mu}$ sont respectivement les constantes d'affaiblissement (*path loss constants*) pour la bande millimétrique et pour la bande sub-6GHz, $\alpha_{Svm}$ et $\alpha_{Sv\mu}$ sont respectivement les exposants d'affaiblissement (*path loss exponents*) pour la bande millimétrique et pour la bande sub-6GHz. Dans un modèle d'affaiblissement de propagation (*path loss*) logarithmique, les coefficients d'affaiblissement (*path loss coefficients*) dans ces deux bandes sont donnés par:

$$\eta_{Svm}\left(dB\right) = K_{Svm} + 10\alpha_{Svm} \log_{10}\left(d\right) \qquad (6\text{-}1)$$

$$\eta_{Sv\mu}\left(dB\right) = K_{Sv\mu} + 10\alpha_{Sv\mu} \log_{10}\left(d\right) \qquad (6\text{-}2)$$

où $d$ est la distance entre le terminal UE et la station de base SBS.

La probabilité $P_{tvr}$ dans l'expression (4) est alors donnée par :

$$P_{tvr} = P_{tv} P_{vr} \qquad (7)$$

où $P_{tv}$ est donnée par l'une des expressions (4-1) à (4-4) et $P_{vr}$ est donnée par l'une des expressions (5-1) à (5-2).

A l'étape 230, en utilisant les principes de géométrie stochastique, tels que présentés dans l'article de H. ElSawy et al. intitulé « Stochastic geometry for modeling, analysis and design of multi-tier and cognitive cellular wireless networks : a survey » publié dans IEEE Com. Surveys & Tutorials, vol. 15, N° 3, 2013, pp. 996-1019, on calcule la probabilité de couverture conditionnelle $P(SINR > \gamma|t,v,r)$ dans la bande sub-6GHz (c'est-à-dire $r = \mu$):

$$P\left(SINR > \gamma\,|\,t,v,\mu\right) = \int_0^\infty \exp\left(-\gamma\sigma_{N,\mu}^2 x - \sum_{t',v'} A_{t'v'}\left(\gamma,x\right)\right)\hat{f}_{\xi tv\mu 1}(x)dx$$

$$(8)$$

$$A_{t'v'} = \int_{l_{t'}}^\infty \frac{\gamma x}{y + \gamma x}\Lambda'_{t'v'\mu}(y)dy \quad \forall t' \in \{M,S\},$$

où $v' \in \{L,N\}$ avec $l_{t'} = x/Q_T$ si $t' = t$ ; $l_{t'} = Q_T x$ si $t = M$ et $t' = S$ ; $l_{t'} = x/Q_T$ si $t = S$ et $t' = M$, $\sigma_{N,\mu}^2$ est la puissance de bruit dans la bande sub-6GHz et où $\hat{f}_{\xi tv\mu 1}(x)$ représente la densité de probabilité (pdf) de la distance de la station de base de plus forte puissance reçue de niveau $t$, de visibilité $v$, dans la bande sub-6GHz, et enfin où $\Lambda'_{t'v'\mu}$ représente le nombre de points du processus de Poisson lié aux stations de base MBS ($t' = M$) resp. SBS ($t' = S$) dans la bande sub-6GHz.

De manière similaire, on calcule la probabilité de couverture conditionnelle $P(SINR > \gamma|t,v,r)$ dans la bande millimétrique ($t = S, r = m$) au moyen de :

$$P\left(SINR > \gamma\,|\,S,v,m\right) = \int_0^\infty \exp\left(-\frac{\gamma\sigma_{N,m}^2 x}{G_0} - B_1\left(\gamma,x\right) - B_2\left(\gamma,x\right)\right)\hat{f}_{\xi Svm1}(x)dx \quad (9)$$

avec

$$B_1\left(\gamma,x\right) = \sum_{k=1}^4\left(-b_k\int_x^\infty \frac{a_k\gamma x}{y + a_k\gamma x}\Lambda'_{Svm}(y)dy\right)$$

et

$$B_2\left(\gamma,x\right) = \sum_{k=1}^4\left(-b_k\int_x^\infty \frac{a_k\gamma x}{y + a_k\gamma x}\Lambda'_{Sv'm}(y)dy\right)$$

où $\sigma_{N,m}^2$ est la puissance de bruit dans la bande millimétrique, $\hat{f}_{\xi Svm1}(x)$ représente la densité de probabilité (pdf) de la distance de la station de base SBS de plus forte puissance ($t = S$), avec une visibilité $v$, dans la bande millimétrique, et enfin où $\Lambda'_{Svm}$ représente le nombre des points du processus de Poisson lié aux stations de base SBS dans la bande millimétrique.

Les antennes des stations de base SBS dans la bande millimétrique sont supposées directionnelles (par exemple au moyen d'une formation de faisceau) avec un lobe principal correspondant à un gain $G_h^{SBS}$ et une largeur angulaire $\theta_h^{SBS}$ et des lobes secondaires correspondant à un gain $G_l^{SBS}$ et une largeur angulaire $\theta_l^{SBS} = 2\pi - \theta_h^{SBS}$. Une description détaillée du modèle des antennes pourra être trouvée dans l'article de T. Bai *et al.* précité. De même, l'antenne du terminal UE dans la bande millimétrique est supposée directionnelle, avec un lobe principal de gain $G_h^{UE}$ et de largeur angulaire $\theta_h^{UE}$ et des lobes secondaires correspondant à un gain $G_l^{UE}$ et une largeur angulaire

$$\theta_l^{UE} = 2\pi - \theta_h^{UE}.$$

La sommation sur $k = 1,..,4$ correspond aux quatre configurations de recouvrement de lobes entre la station de base SBS supposée associée au terminal UE et le terminal UE lui-même. Les coefficients $a_k$ et $b_k$ sont donnés par la table :

| $k$ | 1 | 2 | 3 | 4 |
|---|---|---|---|---|
| $a_k$ | $G_h^{UE} G_h^{SBS}$ | $G_h^{UE} G_l^{SBS}$ | $G_l^{UE} G_h^{SBS}$ | $G_l^{UE} G_l^{SBS}$ |
| $b_k$ | $\dfrac{\theta_h^{UE}}{2\pi} \cdot \dfrac{\theta_h^{SBS}}{2\pi}$ | $\dfrac{\theta_h^{UE}}{2\pi} \cdot \dfrac{\theta_l^{SBS}}{2\pi}$ | $\dfrac{\theta_l^{UE}}{2\pi} \cdot \dfrac{\theta_h^{SBS}}{2\pi}$ | $\dfrac{\theta_l^{UE}}{2\pi} \cdot \dfrac{\theta_l^{SBS}}{2\pi}$ |

Pour simplifier les calculs, les stations de base SBS interférentes (c'est-à-dire distinctes de la station de base SBS associée) sont supposées posséder un lobe principal d'orientation arbitraire par rapport au lobe principal du terminal.

A l'étape 240, on calcule la probabilité de couverture au moyen de l'expression (3), autrement dit :

$$P_c(\gamma) = \sum_{\substack{t \in \{M,S\} \\ v \in \{L,N\}}} P\left(SINR > \gamma | t, v, \mu\right) P_{tv} P_{v\mu} + \sum_{v \in \{L,N\}} P\left(SINR > \gamma | S, v, m\right) P_{Sv} P_{vm} \quad (10)$$

où les probabilités de SINR conditionnelles $P(SINR > \gamma | t, v, \mu)$ et $P(SINR > \gamma | S, v, m)$ ont été respectivement calculées à l'étape 230.

On comprendra que la probabilité de couverture $P_c(\gamma)$ dépend des paramètres du réseau, tels que la densité de déploiement des macrocellules et des microcellules, les puissances d'émission des stations MBSs et SBSs, le gain d'antenne $G_0$, les valeurs de biais $Q_T$ et $Q_R$. Tous les paramètres du réseau étant égaux par ailleurs, la probabilité de couverture peut être considérée comme une fonction de $G_0$, $Q_T$, et $Q_R$ :

$$P_c(\gamma) = F(G_0, Q_T, Q_R) \quad (11)$$

A l'étape 250, on recherche, pour un gain d'antenne $G_0$ donné, c'est-à-dire en pratique pour un gain d'antenne donné du terminal UE dans la bande millimétrique (le gain d'antenne de la station SBS étant supposé fixe), le couple de valeurs de biais $(Q_T^{opt}, Q_R^{opt})$ maximisant la probabilité de couverture, c'est-à-dire :

$$(Q_T^{opt}, Q_R^{opt}) = \arg\max_{\substack{Q_T \in S_{QT} \\ Q_R \in S_{QR}}} \left( F(G_0, Q_T, Q_R) \right) \quad (12)$$

où $S_{QT}$ et $S_{QR}$ sont respectivement les ensembles de valeurs possibles de biais $Q_T$ et $Q_R$. On notera dans la suite $F^*(G_0) = F(G_0, Q_T^{opt}, Q_R^{opt})$ la probabilité de couverture obtenue pour le couple de biais optimal $(Q_T^{opt}, Q_R^{opt})$.

La recherche en 250 du couple optimal $(Q_T^{opt}, Q_R^{opt})$ sur $S_{QT} \times S_{QR}$ pourra être effectuée selon différentes variantes comme expliqué ci-après.

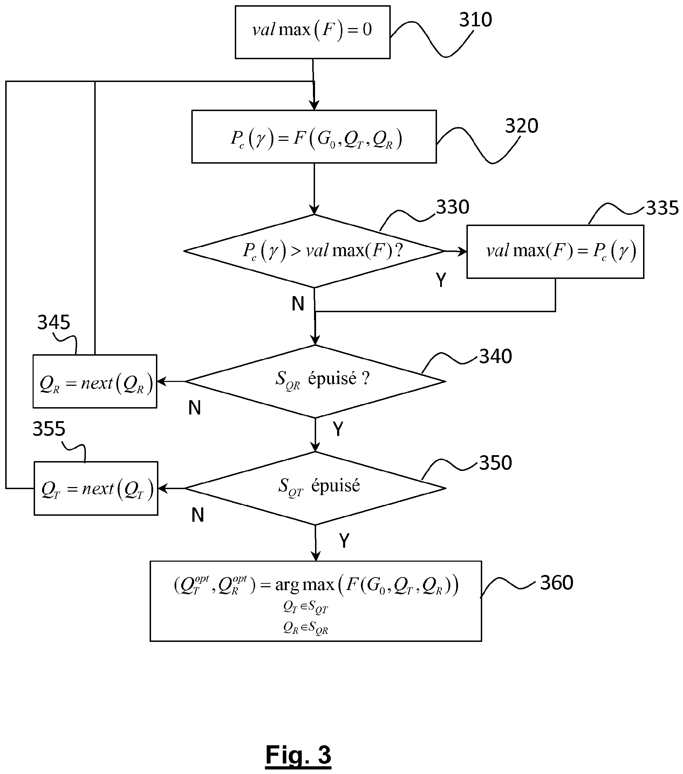

La Fig. 3 représente de manière schématique l'ordinogramme d'une première variante de recherche du couple optimal $(Q_T^{opt}, Q_R^{opt})$.

Cette première variante consiste en une recherche de type force brute au sein du produit cartésien $S_{QT} \times S_{QR}$, autrement dit cette recherche est réalisée au moyen d'une double boucle d'itération sur les éléments $Q_T$ et $Q_R$ de $S_{QT}$ et $S_{QR}$. Les ensembles $S_{QT}$ et $S_{QR}$ sont en pratique des intervalles de valeurs discrètes.

On calcule la probabilité de couverture $P_c(\gamma) = F(G_0, Q_T, Q_R)$ en 320 et on la compare avec la valeur maximale *val*max(*F*) en 330, celle-ci ayant été préalablement initialisée à 0 à l'étape 310. Si la probabilité de couverture ainsi calculée vérifie $P_c(\gamma)>$*val*max(*F*) en 330, la valeur maximale est mise à jour avec cette probabilité en 335. Dans tous les cas, on poursuit la recherche jusqu'à balayage complet de $S_{QT} \times S_{QR}$ (340, 350) en vérifiant s'il existe encore des couples d'éléments (*Q_T*,*Q_R*) à tester. Dans l'affirmative on passe à la valeur de seuil suivante de $Q_T$ (355) ou de $Q_R$ (345), selon le cas. Dans la négative, on termine en 360, en récupérant les valeurs de seuil optimales $(Q_T^{opt}, Q_R^{opt})$ correspondant au maximum de $F(G_0,Q_T,Q_R)$.

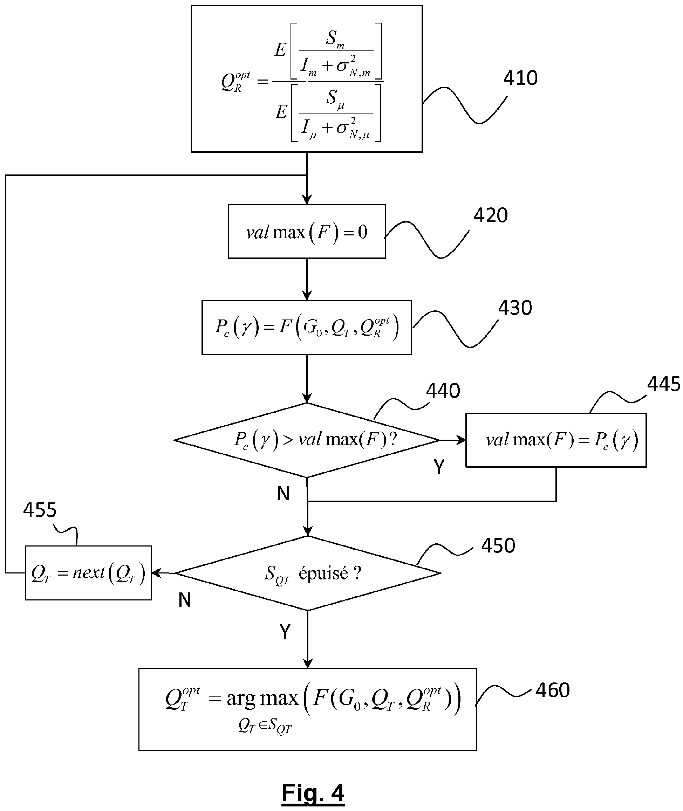

La Fig. 4 représente de manière schématique l'ordinogramme d'une seconde variante de recherche du couple optimal $(Q_T^{opt}, Q_R^{opt})$.

Cette seconde variante pourra être utilisée si la recherche par force brute est trop complexe, par exemple si le cardinal de l'ensemble $S_{QT} \times S_{QR}$ est trop élevé.

Dans ce cas, on calcule dans un premier temps, à l'étape 410, une valeur optimale du biais $Q_R$, selon une formule heuristique suivante :

$$Q_R^{opt} = \frac{E\left[\dfrac{S_m}{I_m + \sigma_{N,m}^2}\right]}{E\left[\dfrac{S_\mu}{I_\mu + \sigma_{N,\mu}^2}\right]} \qquad (13)$$

où $E[.]$ représente l'espérance mathématique prise sur l'ensemble des positions relatives possibles du terminal par rapport aux stations de base du réseau, $\dfrac{S_m}{I_m + \sigma_{N,m}^2}$ représente le SINR au niveau du terminal dans la bande millimétrique et $\dfrac{S_\mu}{I_\mu + \sigma_{N,\mu}^2}$ le SINR au niveau du terminal dans la bande sub-6GHz. $I_m$ représente la somme des interférences générées dans la bande millimétrique par les stations de base SBSs (en LOS et NLOS). De même, $I_\mu$ représente la somme des interférences générées dans la bande sub-6GHz par les stations de base MBSs et SBSs (en LOS et NLOS).

Dès lors que la valeur optimale $Q_R^{opt}$ est obtenue, on peut effectuer une recherche de la valeur optimale $Q_T^{opt}$, par force brute, selon une seule dimension :

$$Q_T^{opt} = \arg\max_{Q_T \in S_{QT}} \left( F(G_0, Q_T, Q_R^{opt}) \right) \qquad (14)$$

Pour ce faire, on initialise en 420, une valeur *val*max(*F*) à zéro et on entre dans une boucle d'itération où l'on sélectionne un élément de $S_{QT}$. A chaque itération, on calcule en 430 la probabilité de couverture $P_c(\gamma) = F(G_0, Q_T, Q_R^{opt})$ et on la compare avec la valeur courante *val*max(*F*) en 440. Si la probabilité de couverture ainsi calculée est telle que $P_c(\gamma)>$*val*max(*F*), la valeur maximale est mise à jour avec cette probabilité en 445. Dans tous les cas, on vérifie en 450 s'il existe d'autres valeurs de $Q_T$ à tester. Dans l'affirmative, on retourne à l'étape 455. A défaut, on termine la recherche en 460 en la récupérant la valeurs de seuil optimale $Q_T^{opt}$ correspondant au maximum de $F(G_0, Q_T, Q_R^{opt})$.

Une troisième variante (non représentée) de recherche du couple de biais optimal consiste en une simplification de la seconde variante dans le cas particulier où les stations de base SBSs n'émettent que dans la bande millimétrique.

Dans ce cas, on peut montrer que la probabilité de couverture $F(G_0, Q_T, Q_R)$ et en particulier $F\left(G_0, Q_T, Q_R^{opt}\right)$ est convexe par rapport à $Q_T$. La valeur $Q_T^{opt}$ peut alors être obtenue par la méthode du gradient.

La méthode de répartition de charge dans un réseau hétérogène avec multitechnologie d'accès radio telle que décrite ci-dessus permet d'obtenir une répartition de charge optimale en termes de SINR, en moyenne pour les différents terminaux UEs du réseau. Toutefois, l'opérateur peut souhaiter que certains terminaux UEs soient pris en charge par les stations SBSs dans la bande millimétrique pour soulager la bande sub-6 GHz, sans pour autant déroger au critère d'optimalité en termes de SINR pour l'association des terminaux en question.

Selon un second mode de réalisation de l'invention, on procède optionnellement, après la répartition de charge selon le premier mode de réalisation, à une modification de cette répartition en faveur de la bande millimétrique.

Pour ce faire, on introduit une distance critique, $d_{CL}$, à partir du terminal UE que l'on souhaite faire prendre en charge par une station de base SBS dans la bande millimétrique. Cette distance critique définit un disque autour du terminal en question. S'il existe une station de base SBS et une seule dans ce disque, l'utilisateur sera associé à cette station de base dans la bande millimétrique.

Cette distance critique est donnée par :

$$d_{CL} = \left( \frac{K_{SLm}.P_{SLm}}{K_{SL\mu}.P_{SL\mu}} G_0 \right)^{\frac{1}{\alpha_{SLm} - \alpha_{SL\mu}}} \tag{15}$$

où $K_{SLm}$ et $K_{SL\mu}$ sont respectivement les constantes d'affaiblissement pour la bande millimétrique et pour la bande sub-6 GHz dans le cas d'un trajet de propagation en ligne directe (LOS), $P_{SLm}$ et $P_{SL\mu}$ sont les puissances émises par la SBS respectivement dans la bande millimétrique et dans la bande sub-6 GHz et $\alpha_{SLm}$ et $\alpha_{SL\mu}$ sont respectivement les exposants d'affaiblissement (*path loss exponents*) pour la bande millimétrique et pour la bande sub-6 GHz sur ce trajet.

On comprendra que, si une station de base SBS est située dans un disque de rayon $d_{CL}$ autour du terminal UE, la puissance du signal reçu dans la bande millimétrique est supérieure à celle du signal reçu dans la bande sub-6 GHz. En outre, dans la mesure où les autres stations SBS sont à l'extérieur de cette zone, le niveau d'interférence dans la bande sub-6 GHz (provenant d'autres stations SBSs ou de stations MBSs) est plus élevé que dans la bande millimétrique. Il en résulte que le niveau de SINR dans la bande millimétrique est nécessairement plus élevé que dans bande sub-6GHz et, par conséquent, que le terminal s'associera avec la station de base SBS dans la bande millimétrique.

Si l'on note $d$ la distance du terminal UE avec la station de base qui le sert dans la bande sub-6 GHz, il suffit alors à l'opérateur de demander au terminal de modifier son gain d'antenne de réception (par exemple en modifiant la formation de faisceau par le réseau d'antennes du terminal) de manière à ce que $d_{CL} = d$, c'est-à-dire :

$$G_0^{offload} = \left( \frac{K_{SL\mu}.P_{SL\mu}}{K_{SLm}.P_{SLm}} \right) d^{(\alpha_{SLm} - \alpha_{SL\mu})} \tag{16}$$

ou encore, si l'on rappelle que le gain $G_0$ est le produit du gain d'antenne de réception du terminal $G_{RX,m}^{UE}$ dans la bande millimétrique et du gain d'antenne d'émission de la station de base SBS dans cette bande, $G_{TX,m}^{SBS}$ :

$$G_{RX,m}^{UE} = \frac{1}{G_{TX,m}^{SBS}} \left( \frac{K_{SL\mu}.P_{SL\mu}}{K_{SLm}.P_{SLm}} \right) d^{(\alpha_{SLm} - \alpha_{SL\mu})} \tag{17}$$

L'expression (17) n'est valable que dans l'hypothèse *supra* où les antennes d'émission (de la station de base SBS) et de réception (du terminal UE) sont omnidirectionnelles dans la bande sub-6GHz (gain d'antenne égal à 1 dans cette bande). Si cette hypothèse ne s'applique pas et si l'on note respectivement $G_{RX,\mu}^{UE}$ et $G_{TX,\mu}^{SBS}$ les gains de l'antenne de réception du terminal UE et de l'antenne d'émission de la station de base SBS dans la bande sub-6GHz, l'expression (17) devient :

$$G_{RX,m}^{UE} = \frac{G_{RX,\mu}^{UE} G_{TX,\mu}^{SBS}}{G_{TX,m}^{SBS}} \left( \frac{K_{SL\mu}.P_{SL\mu}}{K_{SLm}.P_{SLm}} \right) d^{\left( \alpha_{SLm} - \alpha_{SL\mu} \right)} \tag{18}$$

auquel cas il sera possible à l'opérateur de demander au terminal UE de modifier $G_{RX,m}^{UE}$ et/ou $G_{RX,\mu}^{UE}$ de manière à ce que la condition (18) soit respectée.

ANNEXE

$$W_1 = \frac{1 - e^{-(K_1+1)t_1}}{1 + K_1} + \exp\left( -\pi\lambda_S d_S^2 \right) \left[ \exp\left( -\Lambda_{ML\mu}' \left( 0, \frac{d_S^{\alpha_{SL\mu}}}{Q_T K_{SL\mu} P_S} \right) \right) - \exp\left( -\pi\lambda_M d_M^2 \right) \right]$$

$$W_2 = \exp\left( -\pi\lambda_S d_S^2 \right) \frac{e^{-(K_2+1)t_2}}{1 + K_2}$$

avec

$$\Lambda_{ML\mu}' \left( 0, \frac{d_S^{\alpha_{SL\mu}}}{Q_T K_{SL\mu} P_S} \right)$$

$$= \begin{cases} \pi\lambda_M \left( K_{ML\mu} P_M \right)^{\frac{2}{\alpha_{ML\mu}}} \left( \frac{d_S^{\alpha_{SL\mu}}}{Q_T K_{SL\mu} P_S} \right)^{\frac{2}{\alpha_{ML\mu}}}, & \text{if } \frac{d_S^{\alpha_{SL\mu}}}{Q_T K_{SL\mu} P_S} < \frac{d_M^{\alpha_{ML\mu}}}{K_{ML\mu} P_M} \\[4mm] \pi\lambda_M d_M^2, & \text{if } \frac{d_S^{\alpha_{SL\mu}}}{Q_T K_{SL\mu} P_S} > \frac{d_M^{\alpha_{ML\mu}}}{K_{ML\mu} P_M} \end{cases}$$

$$K_1 = \pi\lambda_S \left( \frac{K_{SL\mu} P_S Q_T}{K_{ML\mu} P_M} \right)^{\frac{2}{\alpha_{SL\mu}}} \left( \pi\lambda_M \right)^{\frac{\alpha_{ML\mu}}{\alpha_{SL\mu}}} \text{ et } t_1 = \pi\lambda_M \left( K_{ML\mu} P_M \right)^{\frac{2}{\alpha_{ML\mu}}} \left( \frac{d_S^{\alpha_{SL\mu}}}{Q_T K_{SL\mu} P_S} \right)^{\frac{2}{\alpha_{ML\mu}}}$$

$$K_2 = \pi\lambda_S \left( \frac{K_{SN\mu} P_S Q_T}{K_{MN\mu} P_M} \right)^{\frac{2}{\alpha_{SN\mu}}} \left( \pi\lambda_M \right)^{\frac{\alpha_{MN\mu}}{\alpha_{SN\mu}}}$$

et

$$t_2 = \pi\lambda_M d_M^2 \left( K_{MN\mu} P_M \right)^{\frac{2}{\alpha_{ML\mu}}}$$

## Revendications

1. Méthode de répartition de charge de trafic au sein d'un réseau hétérogène à multitechnologie d'accès radio, ledit réseau comprenant des macrocellules servies par des stations de base d'un premier niveau du réseau, dites MBSs, opérant dans une première bande de fréquence, et des minicellules servies par des secondes stations de base d'un second niveau du réseau, dites SBS, adaptées à opérer dans ladite première bande de fréquence et dans une seconde bande de fréquence, disjointe de la première bande de fréquence, **caractérisée en ce que** :

   - on acquiert ou mesure (110) des paramètres de couverture dudit réseau ;
   - on détermine (120), à partir des paramètres de couverture dudit réseau, un couple optimal de valeurs de biais $(Q_T^{opt}, Q_R^{opt})$ maximisant la probabilité de couverture, $P_c(\gamma)$, définie comme la probabilité que le rapport signal sur bruit plus interférence au niveau d'un terminal soit en moyenne supérieur à un seuil prédéterminé ($\gamma$) dans la zone de déploiement dudit réseau ;
   - on associe (145) au terminal une station de base MBS, si la plus forte puissance reçue d'une station de base MBS dans la première bande de fréquence est supérieure (140), à la plus forte puissance reçue d'une station SBS dans cette même bande de fréquence, corrigée par la première valeur de biais $(Q_T^{opt})$, l'association étant alors réalisée dans la première bande de fréquence ; et sinon,
   - on associe (165, 170) au terminal la station de base SBS de plus forte puissance reçue par le terminal dans la première bande de fréquence, l'association étant réalisée dans la première bande de fréquence (165) si cette puissance est supérieure à la puissance reçue par le terminal dans la seconde bande de fréquence, corrigée par la seconde valeur de biais, et l'association étant réalisée dans la seconde bande de fréquence (170) dans le cas contraire.

2. Méthode de répartition de charge de trafic selon la revendication 1, **caractérisée en ce que** la première bande de fréquence est une bande sub-6 GHz de 0,7 à 6 GHz et que la seconde bande de fréquence est une bande millimétrique de 25 GHz à 300 GHz.

3. Méthode de répartition de charge de trafic selon la revendication 2, **caractérisée en ce que** la probabilité de couverture, $P_c(\gamma)$, est calculée à partir de

$$P_c(\gamma) = \sum_{\substack{t\in\{M,S\} \\ v\in\{L,N\} \\ r\in\{\mu,m\}}} P\left( SINR > \gamma \big| t,v,r \right) P_{tvr}$$

   où $P_{tvr}$ est la probabilité d'association du terminal avec une station de base de niveau $t\in\{M,S\}$ où $M$ désigne le premier niveau du réseau et $S$ le second niveau du réseau, dans des conditions de visibilité $v\in\{L,N\}$ où $L$ désigne un état de visibilité LOS et $N$ désigne un état de visibilité NLOS, et dans bande de fréquence $r\in\{\mu,m\}$ où $\mu$ désigne la bande sub-6 GHz et $m$ la bande millimétrique, et où $P(SINR > \gamma|t,v,r)$ est la probabilité conditionnelle que le rapport signal sur bruit plus interférence au niveau du terminal excède ledit seuil prédéterminé, $\gamma$.

4. Méthode de répartition de charge de trafic selon la revendication 3, **caractérisée en ce que** la probabilité $P_{tvr}$ d'association du terminal avec une station de base de niveau $t$, dans des conditions de visibilité $v$ et dans bande de fréquence $r$ est calculée au moyen de $P_{tvr} = P_{tv}P_{vr}$ où $P_{tv}$ est la probabilité d'association du terminal avec une station de base de niveau $t$, dans des conditions de visibilité $v$ et $P_{vr}$ est la probabilité d'association du terminal avec une station SBS de visibilité $P_{vr}$ dans la bande de fréquence $r$.

5. Méthode de répartition de charge de trafic selon la revendication 3, **caractérisée en ce que** la probabilité $P_{tv}$ est calculée au moyen de :

$$P_{tv} = W_1 \exp\left(-\pi\lambda_M d_M^2\right)\exp\left(-\pi\lambda_S d_S^2\right) + \exp\left(-\pi\lambda_M d_M^2\right)\left(1 - \exp\left(-\pi\lambda_S d_S^2\right)\right)$$

pour une association avec une station de base MBS dans un état de visibilité LOS,

$$P_{tv} = W_2 \left(1 - \exp\left(-\pi\lambda_M d_M^2\right)\right)\left(1 - \exp\left(-\pi\lambda_S d_S^2\right)\right)$$

pour une association avec une station de base MBS dans un état de visibilité NLOS,

$$P_{tv} = \left(1 - W_1\right)\exp\left(-\pi\lambda_M d_M^2\right)\exp\left(-\pi\lambda_S d_S^2\right) + \exp\left(-\pi\lambda_S d_S^2\right)\left(1 - \exp\left(-\pi\lambda_M d_M^2\right)\right)$$

pour une association avec une station de base SBS dans un état de visibilité LOS, et

$$P_{tv} = \left(1 - W_2\right)\left(1 - \exp\left(-\pi\lambda_M d_M^2\right)\right)\left(1 - \exp\left(-\pi\lambda_S d_S^2\right)\right)$$

pour une association avec une station de base SBS dans un état de visibilité NLOS, $d_M$ est une distance caractéristique en deçà de laquelle une station de base MBS est en état de visibilité LOS et au-delà de laquelle elle est en état de visibilité NLOS, $d_S$ est une distance caractéristique en deçà de laquelle une station de base SBS est en état de visibilité LOS et au-delà de laquelle elle est en état de visibilité NLOS, $\lambda_M$ et $\lambda_S$ sont des intensités de lois de Poisson donnant respectivement la distribution spatiale des stations de bases MBS et celle des stations de base SBS, $W_1$, et $W_2$ sont des coefficients dépendant des puissances d'émission des stations de base MBS et SBS ainsi que d'une première valeur de biais $Q_T$ utilisé pour la sélection du niveau $t$ de la station de base.

6. Méthode de répartition de charge de trafic selon la revendication 3, **caractérisée en ce que** la probabilité $P_{vr}$ est

$$P_{v\mu} = \exp\left(-\pi\lambda_S \left(\frac{K_{Svm} G_0 Q_R}{K_{Sv\mu}}\right)^{\frac{2}{\alpha_{Svm} - \alpha_{Sv\mu}}}\right)$$

calculée par pour une association avec une station de base SBS dans la bande sub-6GHz et $P_{vm} = 1 - P_{v\mu}$ pour une association avec une station SBS dans la bande millimétrique, où $K_{Svm}$ et $K_{Sv\mu}$ sont respectivement les constantes d'affaiblissement respectives pour la bande millimétrique et la bande sub-6GHz dans un état de visibilité $v$, $\alpha_{Svm}$ et $\alpha_{Sv\mu}$ sont les exposants d'affaiblissement respectifs pour la bande millimétrique et la bande sub-6GHz dans un état de visibilité $v$, $G_0$ est le gain d'antenne, $\lambda_S$ est l'intensité d'une loi de Poisson donnant la distribution spatiale des stations de base SBS, et $Q_R$ est une seconde valeur de biais utilisée pour la sélection de la bande de fréquence dans l'association du terminal avec une station de base SBS.

7. Méthode de répartition de charge de trafic selon l'une des revendications 3 à 6, **caractérisée en ce que** la probabilité conditionnelle $P(SINR > \gamma|t,v,\mu)$ que le rapport signal sur bruit plus interférence au niveau du terminal excède ledit seuil prédéterminé, sachant que le terminal est associé à une station de base de niveau $t$, d'état de visibilité $v$, opérant dans la bande sub-6GHz, est obtenue à partir de la densité de probabilité de la station de base de base de niveau $t$, d'état de visibilité $v$ et de plus forte puissance reçue, ainsi que la mesure de puissance reçue de cette station de base.

8. Méthode de répartition de charge de trafic selon l'une des revendications 3 à 6, **caractérisée en ce que** la probabilité conditionnelle $P(SINR > \gamma|S,v,m)$ que le rapport signal sur bruit plus interférence au niveau du terminal excède ledit seuil prédéterminé, sachant que le terminal est associé à une station de base SBS, d'état de visibilité $v$, opérant dans la bande millimétrique, est obtenue à partir de la densité de probabilité de la station de base SBS de plus forte puissance, de la puissance reçue de cette station de base, des gains d'antenne du terminal et de cette station de base ainsi que des largeurs angulaires des lobes principaux de rayonnement du terminal et de la station de base.

9. Méthode de répartition de charge de trafic selon l'une des revendications 3 à 8, **caractérisée en ce que** la probabilité de couverture est calculée comme une fonction $P_c(\gamma) = F(G_0, Q_T, Q_R)$ où $G_0$ est le gain d'antenne, produit du gain d'antenne de réception du terminal et du gain d'antenne en émission d'une station SBS, et $Q_T, Q_R$ sont lesdites première et seconde valeurs de biais.

10. Méthode de répartition de charge de trafic selon la revendication 9, **caractérisée en ce que** le couple optimal de

valeurs de biais $(Q_T^{opt}, Q_R^{opt})$ est obtenu en balayant systématiquement le produit cartésien $S_{QT} \times S_{QR}$ où $S_{QT}$ est un ensemble de premières valeurs de biais possibles et $S_{QR}$ est un ensemble de secondes valeurs de biais possibles et en recherchant le couple des première et seconde valeurs de biais maximisant la fonction $F(G_0, Q_T, Q_R)$.

**11.** Méthode de répartition de charge de trafic selon la revendication 9, **caractérisée en ce que** le couple optimal de

$$Q_R^{opt} = \frac{E\left[\dfrac{S_m}{I_m + \sigma_{N,m}^2}\right]}{E\left[\dfrac{S_\mu}{I_\mu + \sigma_{N,\mu}^2}\right]}$$

valeurs de biais $(Q_T^{opt}, Q_R^{opt})$ est obtenu en calculant où $\dfrac{S_m}{I_m + \sigma_{N,m}^2}$ est le rapport signal sur bruit au niveau du terminal dans la bande millimétrique, $\dfrac{S_\mu}{I_\mu + \sigma_{N,\mu}^2}$ est le rapport signal sur bruit au niveau du terminal dans la bande sub-6GHz et $E[.]$ est l'espérance mathématique prise sur l'ensemble des positions possibles du terminal par rapport aux stations de base du réseau.

**12.** Méthode de répartition de charge de trafic selon l'une des revendications précédentes, **caractérisée en ce que**, pour transférer un terminal associé à une station de base SBS, de la bande sub-6GHz à la bande millimétrique, on augmente le gain d'antenne du terminal, $G_{RX,m}^{UE}$, dans la bande millimétrique, de manière à ce que

$$G_{RX,m}^{UE} = \frac{G_{RX,\mu}^{UE} G_{TX,\mu}^{SBS}}{G_{TX,m}^{SBS}} \left(\frac{K_{SL\mu}.P_{SL\mu}}{K_{SLm}.P_{SLm}}\right) d^{(\alpha_{SLm} - \alpha_{SL\mu})}$$ où $G_{RX,\mu}^{UE}$ est le gain d'antenne du terminal dans la bande sub-6GHz, $G_{TX,\mu}^{SBS}$ et $G_{TX,m}^{SBS}$ sont les gains d'antenne de la station de base SBS associée avec le terminal, respectivement dans la dans la bande sub-6GHz et dans la bande millimétrique, $K_{SL\mu}$ et $K_{SLm}$ sont respectivement les constantes d'affaiblissement dans la bande sub-6GHz et dans la bande millimétrique, $P_{SL\mu}$ et $P_{SLm}$ sont respectivement les puissances émises par la station de base SBS dans la bande sub-6 GHz et dans la bande millimétrique, $\alpha_{SL\mu}$ et $\alpha_{SLm}$ sont respectivement les exposants d'affaiblissement dans la bande sub-6GHz et dans la bande millimétrique, pour le trajet de propagation direct entre station de base SBS associée avec le terminal, et $d$ est la distance entre la station de base SBS et le terminal.

**Patentansprüche**

**1.** Verfahren zur Verteilung der Verkehrslast innerhalb eines heterogenen Multi-Technologie-Funkzugangsnetzes, wobei das Netz Makrozellen, die von Basisstationen einer ersten Netzebene, MBS genannt, bedient werden, die in einem ersten Frequenzband betrieben werden, und Minizellen umfasst, die von zweiten Basisstationen einer zweiten Netzebene, SBS genannt, bedient werden, die in dem ersten Frequenzband und in einem zweiten, vom ersten Frequenzband getrennten Frequenzband betrieben werden können,
**dadurch gekennzeichnet, dass**

- Abdeckungsparameter des Netzes erfasst oder gemessen werden (110);

- aus den Abdeckungsparametern des Netzes ein optimales Paar von Verzerrungswerten $(Q_T^{opt}, Q_R^{opt})$ bestimmt wird (120), das die Abdeckungswahrscheinlichkeit $P_c(\gamma)$ maximiert, die als die Wahrscheinlichkeit definiert ist, dass das Signal/Rausch-plus-Interferenz-Verhältnis an einem Endgerät im Mittel größer als ein vorbestimmter Schwellenwert ($\gamma$) im Bereich der Bereitstellung des Netzes ist;

- dem Endgerät eine Basisstation MBS zugeordnet wird (145), wenn die höchste empfangene Leistung einer Basisstation MBS im ersten Frequenzband höher ist (140) als die höchste empfangene Leistung einer Station SBS im gleichen Frequenzband, korrigiert um den ersten Verzerrungswert $(Q_T^{opt})$, wobei dann die Zuordnung im ersten Frequenzband erfolgt; und andernfalls

- dem Endgerät die Basisstation SBS mit der höchsten Leistung, die vom Endgerät im ersten Frequenzband empfangen wird, zugeordnet wird (165, 170), wobei die Zuordnung im ersten Frequenzband erfolgt (165), wenn diese Leistung höher ist als die vom Endgerät im zweiten Frequenzband empfangene Leistung, korrigiert um den zweiten Verzerrungswert, und im umgekehrten Fall die Zuordnung im zweiten Frequenzband erfolgt (170).

2. Verfahren zur Verteilung der Verkehrslast nach Anspruch 1,
   **dadurch gekennzeichnet, dass** das erste Frequenzband ein Sub-6-GHz-Band von 0,7 bis 6 GHz ist und das zweite Frequenzband ein Millimeterband von 25 GHz bis 300 GHz ist.

3. Verfahren zur Verteilung der Verkehrslast nach Anspruch 2,
   **dadurch gekennzeichnet, dass** die Abdeckungswahrscheinlichkeit $P_c(\gamma)$ berechnet wird aus

$$P_c(\gamma) = \sum_{\substack{t \in \{M,S\} \\ v \in \{L,N\} \\ r \in \{\mu,m\}}} P(SINR > \gamma | t, v, r) P_{tvr}$$

wobei $P_{tvr}$ die Wahrscheinlichkeit der Zuordnung des Endgerätes zu einer Basisstation der Ebene $t \in \{M, S\}$ ist, wobei M die erste Netzebene und S die zweite Netzebene bezeichnet, unter Sichtbedingungen $v \in \{L, N\}$, wobei L einen Sichtzustand LOS bezeichnet und $N$ einen Sichtzustand NLOS bezeichnet, und im Frequenzband $r \in \{\mu, m\}$, wobei $\mu$ das Sub-6-GHz-Band bezeichnet und $m$ das Millimeterband bezeichnet, und wobei $P(SINR > \gamma | t, v, r)$ die bedingte Wahrscheinlichkeit ist, dass das Signal/Rausch-plus-Interferenz-Verhältnis am Endgerät den vorbestimmten Schwellenwert $\gamma$ überschreitet.

4. Verfahren zur Verteilung der Verkehrslast nach Anspruch 3,
   **dadurch gekennzeichnet, dass** die Wahrscheinlichkeit $P_{tvr}$ der Zuordnung des Endgeräts zu einer Basisstation der Ebene $t$ unter Sichtbedingungen $v$ und im Frequenzband $r$ unter Verwendung von $Ptvr = P_{tv}P_{vr}$ berechnet wird, wobei $P_{tv}$ die Wahrscheinlichkeit der Zuordnung des Endgeräts zu einer Basisstation der Ebene $t$ unter Sichtbedingungen $v$ ist und $P_{vr}$ die Wahrscheinlichkeit der Zuordnung des Endgeräts zu einer Station SBS mit der Sicht $P_{vr}$ im Frequenzband $r$ ist.

5. Verfahren zur Verteilung der Verkehrslast nach Anspruch 3,
   **dadurch gekennzeichnet, dass** die Wahrscheinlichkeit $P_{tv}$ berechnet wird durch

$$P_{tv} = W_1 \exp\left(-\pi\lambda_M d_M^2\right) \exp\left(-\pi\lambda_S d_S^2\right) + \exp\left(-\pi\lambda_M d_M^2\right)\left(1 - \exp\left(-\pi\lambda_S d_S^2\right)\right)$$

für eine Zuordnung zu einer Basisstation MBS in einem Sichtzustand LOS,

$$P_{tv} = W_2\left(1 - \exp\left(-\pi\lambda_M d_M^2\right)\right)\left(1 - \exp\left(-\pi\lambda_S d_S^2\right)\right)$$

für eine Zuordnung zu einer Basisstation MBS in einem Sichtzustand NLOS,

$$P_{tv} = \left(1 - W_1\right)\exp\left(-\pi\lambda_M d_M^2\right)\exp\left(-\pi\lambda_S d_S^2\right) + \exp\left(-\pi\lambda_S d_S^2\right)\left(1 - \exp\left(-\pi\lambda_M d_M^2\right)\right)$$

für eine Zuordnung zu einer Basisstation SBS in einem Sichtzustand LOS, und

$$P_{tv} = \left(1 - W_2\right)\left(1 - \exp\left(-\pi\lambda_M d_M^2\right)\right)\left(1 - \exp\left(-\pi\lambda_S d_S^2\right)\right)$$

für eine Zuordnung zu einer Basisstation SBS in einem Sichtzustand NLOS, wobei $d_M$ ein charakteristischer Abstand ist, unterhalb dessen sich eine Basisstation MBS im Sichtzustand LOS und oberhalb dessen sie sich im Sichtzustand NLOS befindet, $d_S$ ein charakteristischer Abstand ist, unterhalb dessen sich eine Basisstation SBS im Sichtzustand LOS und oberhalb dessen sie sich im Sichtzustand NLOS befindet, $\lambda_M$ und $\lambda_S$ Intensitäten nach der Poisson'schen Gesetzmäßigkeit sind, die die räumliche Verteilung der Basisstationen MBS bzw. die der Basisstationen SBS angeben, $W_1$ und $W_2$ Koeffizienten sind, die von den Sendeleistungen der Basisstationen MBS und SBS und von einem ersten Verzerrungswert $Q_T$ abhängen, der für die Auswahl der Ebene $t$ der Basisstation verwendet wird.

6. Verfahren zur Verteilung der Verkehrslast nach Anspruch 3, **dadurch gekennzeichnet, dass** die Wahrscheinlichkeit $P_{tv}$ berechnet wird durch

$$P_{v\mu} = \exp\left(-\pi\lambda_S \left(\frac{K_{Svm}G_0 Q_R}{K_{Sv\mu}}\right)^{\frac{2}{\alpha_{Svm}-\alpha_{Sv\mu}}}\right)$$

für eine Zuordnung zu einer Basisstation SBS im Sub-6-GHz-Band und $P_{vm} = 1 - P_{v\mu}$ für eine Zuordnung zu einer Station SBS im Millimeterband, wobei $K_{Svm}$ und $K_{Sv\mu}$ die jeweiligen Dämpfungskonstanten für das Millimeterband bzw. das Sub-6-GHz-Band in einem Sichtzustand $v$ sind, wobei $\alpha_{Svm}$ und $\alpha_{Sv\mu}$ die jeweiligen Dämpfungsexponenten für das Millimeterband und das Sub-6-GHz-Band in einem Sichtzustand $v$ sind, wobei $G_0$ der Antennengewinn ist, $\lambda_S$ die Intensität nach der Poisson'schen Gesetzmäßigkeit ist, die die räumliche Verteilung von Basisstationen SBS angibt, und $Q_R$ ein zweiter Verzerrungswert ist, der für die Frequenzbandauswahl bei der Zuordnung des Endgerätes zu einer Basisstation SBS verwendet wird.

7. Verfahren zur Verteilung der Verkehrslast nach einem der Ansprüche 3 bis 6, **dadurch gekennzeichnet, dass** die bedingte Wahrscheinlichkeit $P(\text{SINR} > \gamma \,|t, v, r)$, dass das Signal/Rausch-plus-Interferenz-Verhältnis am Endgerät den vorgegebenen Schwellenwert überschreitet, wobei das Endgerät einer Basisstation SBS der Ebene $t$ im Sichtzustand $v$ zugeordnet ist, die im Sub-6-GHz-Band betrieben wird, aus der Wahrscheinlichkeitsdichte der Basisstation der Ebene $t$ im Sichtzustand $v$ und mit höherer Empfangsleistung sowie durch die Messung der Empfangsleistung dieser Basisstation erhalten wird.

8. Verfahren zur Verteilung der Verkehrslast nach einem der Ansprüche 3 bis 6, **dadurch gekennzeichnet, dass** die bedingte Wahrscheinlichkeit $P(\text{SINR} > \gamma \,|t, v, r)$, dass das Signal/Rausch-plus-Interferenz-Verhältnis am Endgerät den vorgegebenen Schwellenwert überschreitet, wobei das Endgerät einer Basisstation SBS im Sichtzustand $v$ zugeordnet ist, die im Millimeterband betrieben wird, aus der Wahrscheinlichkeitsdichte der Basisstation SBS höherer Leistung, der Empfangsleistung dieser Basisstation, den Antennengewinnen des Endgerätes und dieser Basisstation sowie den Winkelbreiten der Hauptstrahlungskeulen des Endgerätes und der Basisstation erhalten wird.

9. Verfahren zur Verteilung der Verkehrslast nach einem der Ansprüche 3 bis 8, **dadurch gekennzeichnet, dass** die Abdeckungswahrscheinlichkeit berechnet wird als Funktion

$$P_c\left(\gamma\right) = F\left(G_0, Q_T, Q_R\right)$$

wobei $G_0$ der Antennengewinn ist, das Produkt des Empfangsantennengewinns des Endgeräts und des Sendeantennengewinns einer Station SBS ist, und $Q_T$, $Q_R$ der erste und der zweite Verzerrungswert sind.

10. Verfahren zur Verteilung der Verkehrslast nach Anspruch 9, **dadurch gekennzeichnet, dass** das optimale Paar von Verzerrungswerten $(Q_T^{opt}, Q_R^{opt})$ durch systematisches Abtasten des kartesischen Produkts $S_{QT} \times S_{QR}$ er-

halten wird, wobei $S_{QT}$ eine Menge erster möglicher Verzerrungswerte ist und $S_{QR}$ eine Menge zweiter möglicher Verzerrungswerte ist, und durch Suche nach dem Paar erster und zweiter Verzerrungswerte, das die Funktion $F(G_0, Q_T, Q_R)$ maximiert.

**11.** Verfahren zur Verteilung der Verkehrslast nach Anspruch 9, **dadurch gekennzeichnet, dass** das optimale Paar von Verzerrungswerten $(Q_T^{opt}, Q_R^{opt})$ durch Berechnen von

$$Q_R^{opt} = \frac{E\left[\dfrac{S_m}{I_m + \sigma_{N,m}^2}\right]}{E\left[\dfrac{S_\mu}{I_\mu + \sigma_{N,\mu}^2}\right]}$$

erhalten wird, wobei $\dfrac{S_m}{I_m + \sigma_{N,m}^2}$ das Signal/Rausch-Verhältnis am Endgerät im Millimeterband ist, $\dfrac{S_\mu}{I_\mu + \sigma_{N,\mu}^2}$ das Signal/Rausch-Verhältnis am Endgerät im Sub-6-GHz-Band ist und E[.] die mathematische Erwartung ist, die für die Gesamtheit an möglichen Positionen des Endgeräts in Bezug auf die Basisstationen des Netzes angenommen wird.

**12.** Verfahren zur Verteilung der Verkehrslast nach einem der vorangehenden Ansprüche, **dadurch gekennzeichnet, dass**, zum Überführen eines Endgeräts, das einer Basisstation SBS zugeordnet ist, vom Sub-6-GHz-Band in das Millimeterband, der Antennengewinn des Endgeräts $G_{RX,m}^{UE}$ im Millimeterband so erhöht wird, dass

$$G_{RX,m}^{UE} = \frac{G_{RX,\mu}^{UE} G_{TX,\mu}^{SBS}}{G_{TX,m}^{SBS}} \left(\frac{K_{SL\mu}.P_{SL\mu}}{K_{SLm}.P_{SLm}}\right) d^{(\alpha_{SLm} - \alpha_{SL\mu})}$$

wobei $G_{RX,\mu}^{UE}$ der Antennengewinn des Endgeräts im Sub-6-GHz-Band ist, $G_{TX,\mu}^{SBS}$ und $G_{TX,m}^{SBS}$ die Antennengewinne der Basisstation SBS sind, die dem Endgerät im Sub-6-GHz-Band bzw. im Millimeterband zugeordnet ist, $K_{SL\mu}$ und $K_{SLm}$ die Dämpfungskonstanten im Sub-6-GHz-Band bzw. im Millimeter-Band sind, $P_{SL\mu}$ und $P_{SLm}$ die von der Basisstation SBS ausgegebenen Leistungen im Sub-6-GHz-Band bzw. im Millimeter-Band sind, $\alpha_{SL\mu}$ und $\alpha_{SLm}$ die Dämpfungsexponenten im Sub-6-GHz-Band bzw. im Millimeter-Band für den direkten Ausbreitungsweg zwischen der dem Endgerät zugeordneten Basisstation SBS sind und $d$ der Abstand zwischen der Basisstation SBS und dem Endgerät ist.

## Claims

**1.** A method for distributing a traffic load within a heterogeneous network with multi radio access technology, said network comprising macrocells served by base stations of a first tier of the network, called MBSs, operating in a first frequency band, and minicells served by second base stations of a second tier of the network, called SBS, adapted to operate in said first frequency band and in a second frequency band, disjoined from the first frequency band, **characterised by**:

- acquiring or measuring (110) coverage parameters of said network;

- determining (120), from the coverage parameters of said network, an optimum pair of bias values $(Q_T{}^{opt}, Q_R{}^{opt})$ maximising the coverage probability, $P_c(\gamma)$, defined as the probability that the signal-to-noise plus interference ratio at a terminal is on average greater than a predetermined threshold ($\gamma$) in the deployment zone of said network;

- associating (145) to the terminal an MBS base station, if the highest power received from an MBS base station in the first frequency band is greater (140), than the highest power received from an SBS station in this same frequency band, corrected by the first bias value ($Q_T{}^{opt}$), the association being then made in the first frequency band; and if not,

- associating (165, 170) to the terminal the SBS base station of the highest power received by the terminal in the first frequency band, the association being made in the first frequency band (165) if this power is greater than the power received by the terminal in the second frequency band, corrected by the second bias value, and the association being made in the second frequency band (170) otherwise.

2. The method for distributing a traffic load according to claim 1, **characterised in that** the first frequency band is a sub-6GHz band from 0.7 to 6GHz and the second frequency band is a millimetre band from 25GHz to 300GHz.

3. The method for distributing a traffic load according to claim 2, **characterised in that** the coverage probability, $P_c(\gamma)$, is calculated from

$$P_c(\gamma) = \sum_{\substack{t \in \{M,S\} \\ v \in \{L,N\} \\ r \in \{\mu,m\}}} P\left(SINR > \gamma \middle| t, v, r\right) P_{tvr}$$

where $P_{tvr}$ is the probability of associating the terminal with a base station of tier $t \in \{M, S\}$ where $M$ denotes the first tier of the network and $S$ the second tier of the network, under (Non) Line Of Sight conditions $v \in \{L, N\}$ where $L$ denotes a Line Of Sight state and $N$ denotes a Non Line Of Sight state, and in the frequency band $r \in \{\mu, m\}$ where $\mu$ denotes the sub-6GHz band and $m$ the millimetre band, and where $P(SINR > \gamma | t, v, r)$ is the conditional probability that the signal-to-noise plus interference ratio at the terminal exceeds said predetermined threshold, $\gamma$.

4. The method for distributing a traffic load according to claim 3, **characterised in that** the probability $P_{tvr}$ of associating the terminal with a base station of tier $t$, under (Non) Line Of Sight conditions $v$ and in the frequency band $r$ is calculated by means of $P_{tvr} = P_{tv}P_{vr}$ where $P_{tv}$ is the probability of associating the terminal with a base station of tier $t$, under (Non) Line Of Sight conditions $v$ and $P_{vr}$ is the probability of associating the terminal with an SBS station with (Non)Line Of Sight $P_{vr}$ in the frequency band $r$.

5. The method for distributing a traffic load according to claim 3, **characterised in that** probability $P_{tv}$ is calculated by means of:

$$P_{tv} = W_1 \exp\left(-\pi\lambda_M d_M^2\right)\exp\left(-\pi\lambda_S d_S^2\right) + \exp\left(-\pi\lambda_M d_M^2\right)\left(1 - \exp\left(-\pi\lambda_S d_S^2\right)\right)$$

for an association with an MBS base station in a Line Of Sight state,

$$P_{tv} = W_2\left(1 - \exp\left(-\pi\lambda_M d_M^2\right)\right)\left(1 - \exp\left(-\pi\lambda_S d_S^2\right)\right)$$

for an association with an MBS base station in a Non Line Of Sight state,

$$P_{tv} = \left(1 - W_1\right)\exp\left(-\pi\lambda_M d_M^2\right)\exp\left(-\pi\lambda_S d_S^2\right) + \exp\left(-\pi\lambda_S d_S^2\right)\left(1 - \exp\left(-\pi\lambda_M d_M^2\right)\right)$$

for an association with an SBS base station in a Line Of Sight state, and

$$P_{tv} = \left(1 - W_2\right)\left(1 - \exp\left(-\pi\lambda_M d_M^2\right)\right)\left(1 - \exp\left(-\pi\lambda_S d_S^2\right)\right)$$

for an association with an SBS base station in a Non Line Of Sight state, $d_M$ is a characteristic distance below which an MBS base station is in a Line Of Sight state and above which it is in a Non Line Of Sight state, $d_S$ is a characteristic distance below which an SBS base station is in a Line Of Sight state and above which it is in a Non Line Of Sight state, $\lambda_M$ and $\lambda_S$ are intensities of Poisson laws respectively giving the spatial distribution of MBS base stations and that of SBS base stations, $W_1$ and $W_2$ are coefficients depending on emitting powers of MBS and SBS base stations as well as on a first bias value $Q_T$ used for selecting tier $t$ of the base station.

6. The method for distributing a traffic load according to claim 3, **characterised in that** probability $P_{vr}$ is calculated by

$$P_{v\mu} = \exp\left(-\pi\lambda_S \left(\frac{K_{Svm}G_0Q_R}{K_{Sv\mu}}\right)^{\frac{2}{\alpha_{Svm} - \alpha_{Sv\mu}}}\right)$$

for an association with an SBS base station in the sub-6GHz band and $P_{vm} = 1 - P_{v\mu}$ for an association with an SBS base station in the millimetre band, where $K_{Svm}$ and $K_{Sv\mu}$ are the respective path loss constants for the millimetre band and sub-6GHz band respectively in a (Non) Line Of Sight state v, $\alpha_{Svm}$ and $\alpha_{Sv\mu}$ are the respective path loss exponents for the millimetre band and the sub-6GHz band in a (Non) Line Of Sight state v, $G_0$ is the antenna gain, $\lambda_S$ is the intensity of a Poisson law giving the spatial distribution of SBS base stations, and $Q_R$ is a second bias value used for selecting the frequency band in associating the terminal with an SBS base station.

7. The method for distributing a traffic load according to one of claims 3 to 6, **characterised in that** the conditional probability P (SINR > $\gamma|t$, v, $\mu$) that the signal-to-noise plus interference ratio at the terminal exceeds said predetermined threshold, given that the terminal is associated with a base station of tier $t$, with (Non) Line Of Sight state v, operating in the sub-6GHz band, is obtained from the probability density of the base station of tier $t$, with (Non)Line Of Sight state v and of the highest received power, as well as the measurement of power received from this base station.

8. The method for distributing a traffic load according to one of claims 3 to 6, **characterised in that** the conditional probability P(SINR > $\gamma|S$, v, m) that the signal-to-noise plus interference ratio at the terminal exceeds said predetermined threshold, given that the terminal is associated with an SBS base station, with (Non)Line Of Sight state v, operating in the millimetre band, is obtained from the probability density of the SBS base station of the highest power, from the power received from this base station, from antenna gains of the terminal and this base station as well as the angular widths of the main radiation lobes of the terminal and base station.

9. The method for distributing a traffic load according to one of claims 3 to 8, **characterised in that** the coverage probability is calculated as a function $P_c(\gamma) = F(G_0, Q_T, Q_R)$ where $G_0$ is the antenna gain, being the product of the receiving antenna gain of the terminal and of the emitting antenna gain of an SBS base station, and $Q_T$, $Q_R$ are said first and second bias values.

10. The method for distributing a traffic load according to claim 9, **characterised in that** the optimum pair of bias values $\left(Q_T{}^{opt}, Q_R{}^{opt}\right)$ is obtained by systematically scanning the Cartesian product $S_{QT} \times S_{QR}$ where $S_{QT}$ is a set of first possible bias values and $S_{QR}$ is a set of second possible bias values and by searching for the pair of the first and second bias values maximising the function $F(G_0, Q_T, Q_R)$.

**11.** The method for distributing a traffic load according to claim 9, **characterised in that** the optimum pair of bias values

$$Q_R^{opt} = \frac{E\left[\dfrac{S_m}{I_m + \sigma_{N,m}^2}\right]}{E\left[\dfrac{S_\mu}{I_\mu + \sigma_{N,\mu}^2}\right]} \qquad \dfrac{S_m}{I_m + \sigma_{N,m}^2}$$

$(Q_T^{opt}, Q_R^{opt})$ is obtained by calculating $\qquad\qquad$ where $\qquad\qquad$ is the signal-to-

$$\dfrac{S_\mu}{I_\mu + \sigma_{N,\mu}^2}$$

noise ratio at the terminal in the millimetre band, $\qquad\qquad$ is the signal-to-noise ratio at the terminal in the sub-6GHz band and $E[.]$ is the mathematical expectation taken on all the possible positions of the terminal with respect to the base stations of the network.

**12.** The method for distributing a traffic load according to one of the previous claims, **characterised by**, to transfer a terminal associated with an SBS base station, from the sub-6GHz band to the millimetre band, increasing the antenna gain of the terminal, $G^{UE}_{RX,m}$, in the millimetre band, so that

$$G^{UE}_{RX,m} = \frac{G^{UE}_{RX,\mu} G^{SBS}_{TX,\mu}}{G^{SBS}_{TX,m}} \left( \frac{K_{SL\mu} \cdot P_{SL\mu}}{K_{SLm} \cdot P_{SLm}} \right) d^{(\alpha_{SLm} - \alpha_{SL\mu})}$$

where $G^{UE}_{RX,\mu}$ is the antenna gain of the terminal in the sub-6GHz band, $G^{SBS}_{TX,\mu}$ and $G^{SBS}_{TX,m}$ are the antenna gains of the SBS base station associated with the terminal, in the sub-6GHz band and the millimetre band respectively, $K_{SL\mu}$ and $K_{SLm}$ are the path loss constants in the sub-6GHz band and the millimetre band respectively, $P_{SL\mu}$ and $P_{SLm}$ are the powers emitted by the SBS base station in the sub-6GHz band and the millimetre band respectively, $\alpha_{SL\mu}$ and $\alpha_{SLm}$ are the path loss exponents in the sub-6GHz band and the millimetre band respectively, for the direct propagation path between the SBS base station associated with the terminal, and $d$ is the distance between the SBS base station and the terminal.

acquisition des paramètres du réseau $\quad$ 110

détermination du couple optimal
de valeurs de biais $\left( Q_T^{opt}, Q_R^{opt} \right)$ $\quad$ 120

130

mesure de la puissance du signal sub-6GHz la plus élevée d'une MBS
mesure de la puissance du signal sub-6GHz la plus élevée d'une SBS

145

140 $\quad P_{ML\mu 1} \geq Q_T^{opt} . P_{SL\mu 1}$ ? $\quad$ Y $\rightarrow$ assoc. MBS
sélectionnée

N

mesure de la puissance du signal mm reçu de la SBS sélectionnée $\quad$ 150

160 $\quad P_{Sv\mu 1} \geq Q_R^{opt} . P_{Svm 1}$ ? $\quad$ N $\rightarrow$ assoc. SBS sélectionnée
bande mm

Y

170 $\quad$ assoc. SBS sélectionnée
bande sub-6 Ghz

**Fig. 1**

calcul des probabilités d'association

$$P_{tv}, \; t \in \{M,S\}, \; v \in \{L,N\}$$

210

calcul des probabilités d'association à une station de base SBS
dans la bande hyperfréquence et dans la bande mm

$$P_{vr}, \; v \in \{L,N\}, \; r \in \{\mu,m\},$$

220

calcul des probabilités conditionnelles

$$P\big(SINR > \gamma \,|\, t,v,r\big)$$

230

calcul de la probabilité de couverture

$$P_c\big(\gamma\big) = F\big(G_0, Q_T, Q_R\big)$$

240

recherche du couple optimal de valeurs de biais

$$(Q_T^{opt}, Q_R^{opt}) = \underset{\substack{Q_T \in S_{QT} \\ Q_R \in S_{QR}}}{\arg\max} \big(F(G_0, Q_T, Q_R)\big)$$

250

## Fig. 2

$$val\max(F)=0 \quad \rightsquigarrow 310$$

$$P_c(\gamma)=F(G_0,Q_T,Q_R) \quad \rightsquigarrow 320$$

$$P_c(\gamma)>val\max(F)? \quad \rightsquigarrow 330$$

$$val\max(F)=P_c(\gamma) \quad \rightsquigarrow 335$$

Y

N

$$345$$

$$Q_R=next(Q_R)$$

N

$$S_{QR} \text{ épuisé ?} \quad \rightsquigarrow 340$$

Y

$$355$$

$$Q_T=next(Q_T)$$

N

$$S_{QT} \text{ épuisé} \quad \rightsquigarrow 350$$

Y

$$(Q_T^{opt},Q_R^{opt})=\underset{\substack{Q_T\in S_{QT}\\Q_R\in S_{QR}}}{\arg\max}\left(F(G_0,Q_T,Q_R)\right) \quad \rightsquigarrow 360$$

**Fig. 3**

$$Q_R^{opt} = \frac{E\left[\dfrac{S_m}{I_m + \sigma_{N,m}^2}\right]}{E\left[\dfrac{S_\mu}{I_\mu + \sigma_{N,\mu}^2}\right]}$$

410

$$val\max(F) = 0$$

420

$$P_c(\gamma) = F\left(G_0, Q_T, Q_R^{opt}\right)$$

430

440                                                          445

$$P_c(\gamma) > val\max(F)?$$     →     $$val\max(F) = P_c(\gamma)$$

Y

N

455

$$Q_T = next(Q_T)$$     ←     $$S_{QT} \text{ épuisé ?}$$

N                                                           450

Y

$$Q_T^{opt} = \arg\max_{Q_T \in S_{QT}}\left(F(G_0, Q_T, Q_R^{opt})\right)$$

460

**<u>Fig. 4</u>**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Offloading in Heterogeneous Networks: Modeling, Analysis, and Design Insights. **SARABJOT SINGH et al.** IEEE TRANSACTIONS ON WIRELESS COMMUNICATIONS. IEEE SERVICE CENTER, 01 Mai 2013, vol. 12, 2484-2497

- **DE T. BAI et al.** Coverage and rate analysis for millimeter-wave cellular networks. *IEEE Trans. Wireless Comm.,* 2015, vol. 13 (2), 1100-1114
- **DE H. ELSAWY et al.** Stochastic geometry for modeling, analysis and design of multi-tier and cognitive cellular wireless networks : a survey. *IEEE Com. Surveys & Tutorials,* 2013, vol. 15 (3), 996-1019